# EUROPEAN PATENT APPLICATION

(11) **EP 3 667 065 A1**
(43) Date of publication of application: **17.06.2020**
(21) Application number: 18212371.1
(22) Date of filing: 13.12.2018
(51) Int. Cl.: F03D 7/02

(54) **REMOVING VIBRATIONS IN WIND TURBINE BLADES**

(71) Applicant: Siemens Gamesa Renewable Energy A/S, 7330 Brande (DK)
(72) Inventor: Burchardt, Claus, 9260 Gistrup (DK)
(74) Representative: Aspacher, Karl-Georg

(57) **Abstract**

It is proposed a wind turbine (10) including:
- at least one rotor blade (20) comprising an aerodynamic device (30) for influencing the airflow (61) flowing from the leading edge section (24) of the rotor blade (20) to the trailing edge section (23) of the rotor blade (20), wherein the aerodynamic device (30) is mounted at a surface (28) of the rotor blade (20),
- an actuator (34) for operating the aerodynamic device (30) between a first protruded configuration and a second retracted configuration,
- a control unit (51) for controlling the actuator (34),
- at least one sensor (54) for measuring vibrations of the rotor blade (20), the sensor (54) being connected to the control unit (51)
wherein the monitor unit (54) is configured for:
- receiving a vibration signal from the sensor (54),
- controlling the actuator (34) for operating the aerodynamic device (30) so that the geometry of the surface of the rotor blade (20) is changed and the oscillations damped.

## Description

### Field of invention

The present invention relates to a method for removing vibrations in wind turbine blades. Particularly, but not exclusively, the present invention relates to a method for removing edge vibrations in wind turbine blades when the wind turbine is in stand still position. The present invention further relates to a wind turbine including control and monitor devices for removing vibrations in wind turbine blades.

### Art Background

Edge vibration of wind turbine blades may occur when the turbine is in stand still position and a wind load is applied to the turbine. This situation may arise if the grid connection is lost during operation. Consequently, stand still motion of the blades may occur.
Cyclic vortices can occur behind the trail edge of the blades due to a wind load. If the frequency of the vortices is similar to the natural frequencies of the blade it may start to vibrate. Vibration of wind load affected structures may arise if the structure is slender and low damped. For example, a wind turbine blade, with carbon as reinforcement material, may typically vibrate in the chordwise (edgewise) direction. Dangerous vibrations of wind turbine blades may occur in other operational situations.

During stand still, the above described problem may solved by other turbine manufacturer by having a battery backup in the turbine. The battery backup enables the turbine to idle with the rotor or perform yawing of the nacelle and rotor. Alternatively, the blades may be pitched.

Battery backup, pitching the blades or activating the yaw system are not optimal solutions for the above described problem, because the yaw or pitch systems and the rotation of the wind turbine rotor require an amount of energy which may be considered excessive.

It is therefore desirable to reduce dangerous vibrations of wind turbine by using a lower amount of energy.

### Summary of the Invention

This need may be met by the subject matter according to the independent claims. Advantageous embodiments of the present invention are described by the dependent claims.

According to a first aspect of the present invention, it is provided a wind turbine including:
- at least one rotor blade comprising an aerodynamic device for influencing the airflow flowing from the leading edge section of the rotor blade to the trailing edge section of the rotor blade, wherein the aerodynamic device is mounted at a surface of the rotor blade,
- an actuator for operating the aerodynamic device between a first protruded configuration and a second retracted configuration,
- a control unit for controlling the actuator,
- at least one sensor for measuring vibrations of the rotor blade, the sensor being connected to the control unit, wherein the monitor unit is configured for:
- receiving a vibration signal from the sensor,
- controlling the actuator for operating the aerodynamic device so that the geometry of the surface of the rotor blade is changed and the oscillations damped.
According to a second aspect of the present invention, it is provided a method for removing vibrations in a rotor blade for a wind turbine, the rotor blade comprising an aerodynamic device for influencing the airflow flowing from the leading edge section of the rotor blade to the trailing edge section of the rotor blade, wherein the aerodynamic device is mounted at a surface of the rotor blade, the aerodynamic device being movable by an actuator between a first protruded configuration and a second retracted configuration, the method comprising the steps of:
- measuring vibrations of the rotor blade,
- operating the aerodynamic device so that the geometry of the surface of the rotor blade is changed and the oscillations reduced.
The invention allows avoiding cyclic vortices behind the trail edge of the blade, by changing the blade profile and consequently the laminar or turbulent flow around the blade profile.
The frequency of the cyclic load caused by the wind is changed or removed.
Different active aerodynamic devices can be used for the purposes of the present invention.
According to embodiments of the present invention, the aerodynamic device is an active flap, i.e. an aerodynamic device installed at the trailing edge of the rotor blade. Alternatively, the aerodynamic device is an active spoiler, i.e. an aerodynamic device installed in a position intermediate between the leading edge and the trailing edge of the rotor blade.
According to embodiments of the present invention, flaps and spoilers are together provided on the rotor blade and both types of aerodynamic devices may be used to remove vibrations in the rotor blade, according to the present invention.

According to embodiments of the present invention, the sensor measures oscillations of the rotor blade in the chordwise direction.

According to embodiments of the present invention, the method removing vibrations in the rotor blade is applied during a stand still operational state and/or during a connection loss between the wind turbine and an electrical grid to which the wind turbine is connected.

It should be understood that features which have individually or in any combination been disclosed for a method removing vibrations in wind turbine blades may also, individually or in any combination provided for an arrangement for removing vibrations in a wind turbine (in particular comprised in a blade for a wind turbine) according to embodiments of the present invention and vice versa

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

- Figure 1: shows a wind turbine;
- Figure 2: shows a rotor blade of a wind turbine with an aerodynamic device, which is operatable according to the present invention;
- Figure 3: show a first radial section of the rotor blade of figure 2;
- Figure 4: show a second radial section of the rotor blade of figure 2.

### Detailed Description

The drawings are in schematic form. Similar or identical elements are referenced by the same or different reference signs.

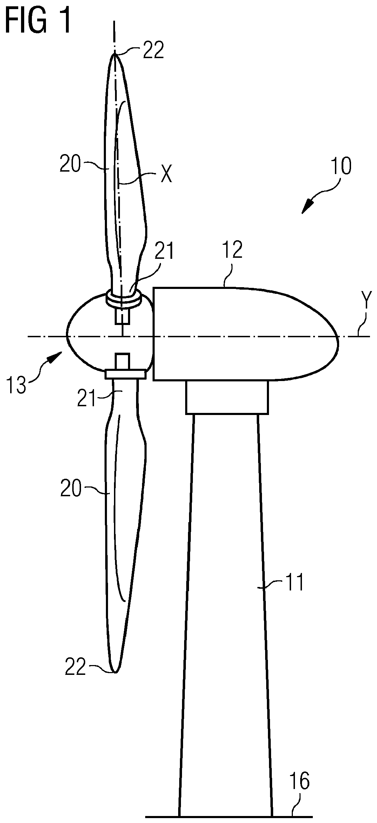

**Figure 1** shows a conventional wind turbine 10 for generating electricity. The wind turbine 10 comprises a tower 11 which is mounted on the ground 16 at one end. At the opposite end of the tower 11 there is mounted a nacelle 12. The nacelle 12 is usually mounted rotatable with regard to the tower 11, which is referred to as comprising a yaw axis substantially perpendicular to the ground 16. The nacelle 12 usually accommodates the generator of the wind turbine and the gear box (if the wind turbine is a geared wind turbine). Furthermore, the wind turbine 10 comprises a hub 13 which is rotatable about a rotor axis Y. When not differently specified, the terms axial, radial and circumferential in the following are made with reference to the rotor axis Y.
The hub 13 is often described as being a part of a wind turbine rotor, wherein the wind turbine rotor is capable to rotate about the rotor axis Y and to transfer the rotational energy to an electrical generator (not shown).

The wind turbine 1 further comprises at least one blade 20 (in the embodiment of Figure 1, the wind rotor comprises three blades 20, of which only two blades 20 are visible) mounted on the hub 13. The blades 4 extend substantially radially with respect to the rotational axis Y.
Each rotor blade 20 is usually mounted pivotable to the hub 13, in order to be pitched about respective pitch axes X. This improves the control of the wind turbine and in particular of the rotor blades by the possibility of modifying the direction at which the wind is hitting the rotor blades 20. Each rotor blade 20 is mounted to the hub 13 at its root section 21. The root section 21 is opposed to the tip section 22 of the rotor blade.

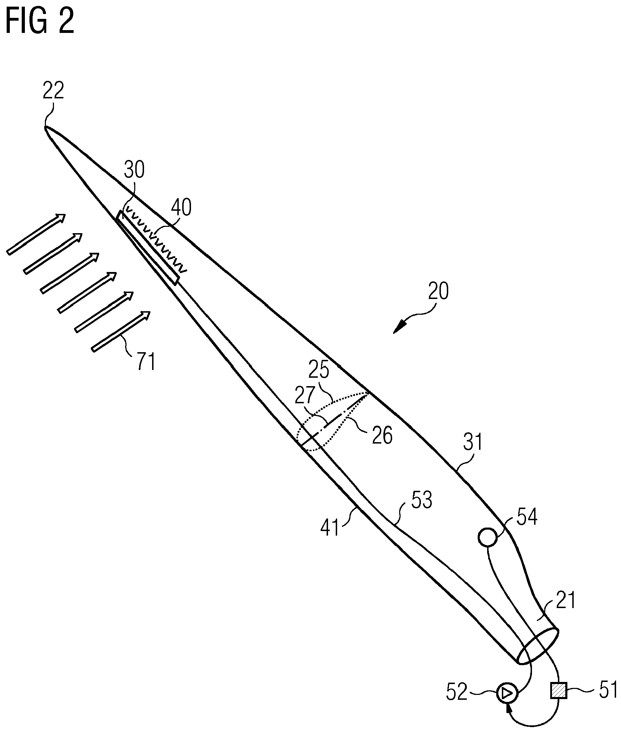

**Figure 2** illustrates the rotor blade 20 comprising an aerodynamic device 30 in the form of an actuated spoiler. Between the root section 21 and the tip section 22 the rotor blade 20 furthermore comprises a plurality of aerofoil sections for generating lift. Each aerofoil section comprises a suction side 25 and a pressure side 26. The aerofoil shape of the aerofoil portion is symbolized by one aerofoil profile which is shown in Figure 2 and which illustrates the cross-sectional shape of the rotor blade at this spanwise position. Also note that the suction side 25 is divided or separated from the pressure side 26 by a chord line 27 which connects a leading edge 41 with a trailing edge 31 of the rotor blade 20.
The aerodynamic device 30 in Figure 2 is movable by means of a pressure line 53 connected to a pneumatic actuator 34. According to the embodiment of the attached figures, the pneumatic actuator 34 is realized as a hose. The hose 34 comprises an elastic outer skin, such that it can inflate and deflate reversibly and during many cycles when operated by means of the pressure line 53.

The pressure line 53 is comprised in a pressure supply system 52 and controlled by a control unit 51. The pressure supply system 52 provides pressurized air, for example pressurized air or other pressurized gas, to the pneumatic actuator 34. In this context, the term "pressurized fluid" not only implies positive pressure but also negative pressure, wherein fluid is sucked (or "drawn") out of the pneumatic actuator 34. The pressure line 53 could be in practice realized as tubes or pipes which do not significantly change their volume. The control unit 51 is responsible for setting a specific pressure at the pressure supply system 52 which subsequently leads to a certain predetermined pressure at the pneumatic actuator 34. By controlling the pressure of the pressurized air the pneumatic actuator 34 is operated between an inflated and a deflated configuration.
According to different embodiments of the present invention, any of the control unit 51 and the pressure supply system 52 may be located in the root section 21 of the rotor blade 20 or placed elsewhere in the wind turbine, such as e.g. in the hub 13 of the wind turbine 10 or in the nacelle 12 or in the tower 11.
The rotor blade 20 additionally comprises a flow regulating unit 40 comprising multiple pairs of vortex generators.
The flow regulating unit 40 are arranged on the suction side 25 of the blade 20 between the aerodynamic device 30 and the the trailing edge 31.
According to other embodiments of the present invention (not shown in the attached figures), the flow regulating unit 40 are arranged on the suction side 25 of the blade 20 between the leading edge 41 and the aerodynamic device 30.
According to other embodiments of the present invention (not shown in the attached figures), the flow regulating unit 40 are not present and only the aerodynamic device 30 is used to regulate the flow on the surface of the blade 20.
According to other embodiments of the present invention (not shown in the attached figures), the blade 20 comprises a plurality of aerodynamic devices 30.
According to other embodiments of the present invention (not shown in the attached figures), the aerodynamic device 30 are configured as a trailing edge flap.
According to other embodiments of the present invention (not shown in the attached figures), the blade 20 may comprise a plurality of aerodynamic devices 30 including flaps and spoilers.
The rotor blade 20 additionally comprises one sensor 54 for measuring vibrations of the rotor blade 20. The sensor 54 is connected to the control unit 51 for transmitting a vibration signal.
According to other embodiments of the present invention (not shown in the attached figures), the blade 20 may comprise a plurality of vibrations sensor 54, distributed along the rotor blade 20.
The control unit 51 elaborates the vibration signal from the sensors 54 to determine a vibration of the rotor blade 20 in the chordwise (edgewise) direction.

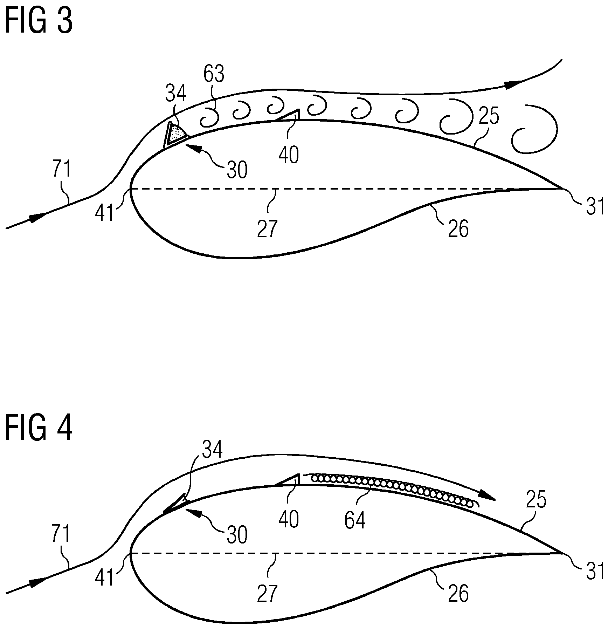

Figure **3** shows the aerodynamic device 30 in a first protruded configuration, corresponding to an inflated configuration of the pneumatic actuator 34.
In the first configuration the aerodynamic device 30 deviates the airflow 71 which is flowing from the leading edge 41 to the trailing edge 31 of the rotor blade.
The aerodynamic device 30 in the first protruded configuration induces stall. This is visualized with relatively large vortices 63 downstream of the aerodynamic device 30. A consequence of the induced stall is a decrease in lift of the rotor blade and, consequently, a reduced loading of the rotor blade and related components of the wind turbine.

Figure **4** shows the aerodynamic device 30 in a second retracted configuration, i.e. moved downwards towards the surface of the rotor blade 20, corresponding to a deflated configuration of the pneumatic actuator 34.
In this second configuration, the airflow 71 flowing across the aerodynamic device 30 remains attached to the surface of the rotor blade 20, thus that no flow separation, i.e. stall, occurs. As a consequence, the lift of the rotor blade increases. Re-energizing vortices 64 are generated in the boundary layer by the vortex generators 40, which have the effect of helping increasing the lift. As a result, the highest lift values can be achieved.

By operating the pneumatic actuator 34 of the aerodynamic device 30 through the pressure line 53, the aerodynamic device 30 can be moved between the first protruded configuration and the second retracted configuration in order to vary the aerodynamic properties of the blade as desired and requested when operating the wind turbine 10.

According to the method of the present invention, the pneumatic actuator 34 operates the aerodynamic device 30 for removing vibrations in the rotor blade 20.
The method comprises the step of:
- measuring vibrations of the rotor blade 20, through the sensors 54 provided on the rotor blade 20, and
- operating the aerodynamic device 30 so that the geometry of the surface of the rotor blade 20 is changed and the oscillations reduced.
This can be performed at any operational state of the wind turbine 10. Particularly, this may be efficiently performed during a stand still operational state to avoid vibrations of the rotor blades 20 due to cyclic vortices caused by the wind load.

## Claims

1. Wind turbine (10) including:
- at least one rotor blade (20) comprising an aerodynamic device (30) for influencing the airflow (61) flowing from the leading edge section (24) of the rotor blade (20) to the trailing edge section (23) of the rotor blade (20), wherein the aerodynamic device (30) is mounted at a surface (28) of the rotor blade (20),
- an actuator (34) for operating the aerodynamic device (30) between a first protruded configuration and a second retracted configuration,
- a control unit (51) for controlling the actuator (34),
- at least one sensor (54) for measuring vibrations of the rotor blade (20), the sensor (54) being connected to the control unit (51),
wherein the monitor unit (54) is configured for:
- receiving a vibration signal from the sensor (54),
- controlling the actuator (34) for operating the aerodynamic device (30) so that the geometry of the surface of the rotor blade (20) is changed and the oscillations damped.

2. Wind turbine (10) according to claim 1, wherein the sensor (54) measures oscillations of the rotor blade (20) in the chordwise direction.

3. Wind turbine (10) according to claim 1 or 2, wherein the aerodynamic device (30) is a flap.

4. Wind turbine (10) according to any of the preceding claims, wherein the aerodynamic device (30) is a spoiler.

5. Method for removing vibrations in a rotor blade (20) for a wind turbine (10), the rotor blade (20) comprising an aerodynamic device (30) for influencing the airflow (61) flowing from the leading edge section (24) of the rotor blade (20) to the trailing edge section (23) of the rotor blade (20), wherein the aerodynamic device (30) is mounted at a surface (28) of the rotor blade (20), the aerodynamic device (30) being movable by an actuator between a first protruded configuration and a second retracted configuration, the method comprising the steps of:
- measuring vibrations of the rotor blade (20),
- operating the aerodynamic device (30) so that the geometry of the surface of the rotor blade (20) is changed and the oscillations reduced.

6. Method according to claim 5, wherein oscillations of the rotor blade (20) are measured in the chordwise direction.

7. Method according to claim 5 or 6, wherein the method is applied during a stand still operational state.

8. Method according to claim 5 or 6, wherein the method is applied during a connection loss between the wind turbine (10) and an electrical grid to which the wind turbine (10) is connected.
